# EUROPÄISCHE PATENTSCHRIFT

(11) **EP 4 528 993 B1**
(45) Veröffentlichungstag und Bekanntmachung des Hinweises auf die Patenterteilung: **29.04.2026**
(21) Anmeldenummer: 24192793.8
(22) Anmeldetag: 05.08.2024
(51) Int. Cl.: H02K 5/04, F04D 13/06, F04D 29/62, H02K 5/15, H02K 5/16, H02K 5/167, H02K 5/20, H02K 7/14, H02K 5/08

(54) **MOTOR UND PUMPE MIT EINEM SOLCHEN MOTOR**
MOTOR AND PUMP COMPRISING SUCH A MOTOR
MOTEUR ET POMPE COMPRENANT UN TEL MOTEUR

(30) Priorität: 21.08.2023 DE 102023122289
(43) Veröffentlichungstag der Anmeldung: 26.03.2025
(73) Patentinhaber: E.G.O. Elektro-Gerätebau GmbH, 75038 Oberderdingen (DE)
(72) Erfinder: Albert, Tobias, 76703 Kraichtal (DE); Kögel, Uwe, 75057 Kürnbach (DE); Haazendonk, Joachim, 75038 Oberderdingen (DE)
(74) Vertreter: Patentanwälte Ruff, Wilhelm, Beier, Dauster & Partner mbB

(56) Entgegenhaltungen:
- DE-A1- 102013 022 020
- DE-A1- 102021 215 040
- DE-U- 6 917 190

## Beschreibung

Die Erfindung betrifft einen Motor bzw. einen Elektromotor, wie er insbesondere eine Baueinheit mit einer Pumpe bzw. einem Pumpenteil für Flüssigkeit bildet, also als Flüssigkeitspumpe. Des Weiteren betrifft die Erfindung eine Pumpe mit einem solchen Motor.

Derartige Baueinheiten eines Motors bzw. Elektromotors mit einer Pumpe sind aus dem Stand der Technik bekannt, siehe beispielsweise EP 3 008 346 B1. Hier bildet ein Elektromotor eine Baueinheit mit einer Pumpe, wobei zur verbesserten Integration vorgesehen sein kann, dass der Motor keine eigenständig handhabbare Baueinheit ist und auch in beliebige andere Anwendungen eingesetzt werden könnte, sondern ein den Motor umgebendes oder nach außen schließendes Gehäuse integraler Teil der gesamten Baueinheit ist.

Aus der DE 10 2013 022 020 A1 ist ein Elektromotor bekannt für einen Kühllüfter, wobei ein feststehender Stator und ein darin drehbar gelagerter Rotor vorgesehen sind. Von hinten ist an den Elektromotor eine Art Elektronikfach mit einer Umrichterelektronik angesetzt, welche wiederum mit einem Elektronikfachdeckel als Motorabdeckung abgedeckt ist. Von dem Elektronikfachdeckel stehen Rastverbinder ab, um ihn an einem Motorträger zu befestigen.

Aus der DE 69 17 190 U ist ein weiterer Elektromotor bekannt, der für eine Kreiselpumpe verwendet wird. Dort ist ein vorderer Pumpenteil der Kreiselpumpe mit einem Impeller, einem Ansaugrohr und einem Auslassrohr auf einen vorderen Motorschild des Elektromotors aufgeklipst.

Aus der DE 10 2021 215 040 A1 geht ein nochmals weiterer Elektromotor hervor mit Stator und Rotor, der Rastfederarme zur Befestigung einer Isolationsmaske für Statorwicklungen aufweist. Diese Rastfederarme verlaufen parallel zu einer Längsmittelachse des Elektromotors, und in dieser Richtung kann die Isolationsmaske an dem Elektromotor mittels Rastverbindung befestigt werden.

### AUFGABE UND LÖSUNG

Der Erfindung liegt die Aufgabe zugrunde, einen eingangs genannten Motor zu schaffen sowie eine entsprechende gesamthafte Pumpe mit einem solchen Motor zu schaffen, mit denen Probleme des Standes der Technik gelöst werden können und es insbesondere möglich ist, eine Integration des Motors in eine Pumpe zu verbessern und einen vorteilhafteren Aufbau zu erreichen bei gleichzeitiger hoher Funktionalität und Sicherheit für den Motor.

Gelöst wird diese Aufgabe durch einen Motor mit den Merkmalen des Anspruchs 1 sowie durch eine Pumpe als Baueinheit mit einem solchen Motor mit den Merkmalen des Anspruchs 14. Vorteilhafte sowie bevorzugte Ausgestaltungen der Erfindung sind Gegenstand der weiteren Ansprüche und werden im Folgenden näher erläutert. Dabei werden manche der Merkmale nur für den Motor oder nur für die Pumpe beschrieben. Sie sollen jedoch unabhängig davon sowohl für einen solchen Motor als auch für eine solche Pumpe selbstständig und unabhängig voneinander gelten können. Der Wortlaut der Ansprüche wird durch ausdrückliche Bezugnahme zum Inhalt der Beschreibung gemacht.

Der erfindungsgemäße Motor weist einen Stator auf, der insbesondere ein Statorblechpaket und Statorwindungen an diesem Statorblechpaket aufweist. Des Weiteren weist der Motor einen Rotor auf, wobei der Rotor ein vorderes Ende und ein hinteres Ende hat sowie eine Längsmittelachse aufweist, die auch der Längsmittelachse des gesamten Motors entspricht bzw. diese definiert. Der Motor weist eine Rotorlagerung für diesen Rotor auf. Die Rotorlagerung wiederum weist eine hintere Lageraufnahme für das hintere Ende des Rotors auf, vorteilhaft derart, dass diese hintere Lageraufnahme ganz am hinteren Ende des Rotors vorgesehen ist. Die hintere Lageraufnahme kann das Ende des Rotors auch überdecken bzw. abdecken. Es kann auch eine vordere Lageraufnahme für das vordere Ende des Rotors vorgesehen sein, die hier aber keine Rolle spielt. Der Motor weist eine Motorabdeckung im Bereich der hinteren Lageraufnahme auf, so dass diese Motorabdeckung den Motor samt der hinteren Lageraufnahme nach hinten sozusagen abdeckt oder schließt bzw. dessen hinteres Ende bilden kann. Vorteilhaft ist diese Motorabdeckung kein zwingend per se tragendes Bauteil, sondern verschließt das hintere Ende des Motors gegen Verschmutzung, wobei sie auch noch weitere Funktionen übernehmen kann, wie nachfolgend noch näher erläutert wird. Die Motorabdeckung kann nicht nur das hintere Ende des Motors als eine Art hintere Stirnseite übergreifen oder abdecken, sondern gegebenenfalls auch zumindest einen Teil des Außenumfangs des Motors bilden oder diesen übergreifen.

Erfindungsgemäß ist die Motorabdeckung mit mindestens der hinteren Lageraufnahme formschlüssig verbunden, insbesondere werkzeuglos lösbar und befestigbar verbunden. Diese formschlüssige Verbindung ist vorteilhaft derart ausgebildet, dass die Motorabdeckung dadurch gegen eine Bewegung in axialer Richtung des Motors weg von der Pumpe oder weg von einem vorderen Ende des Rotors gesichert ist. Sie soll ganz einfach die Motorabdeckung fest, aber auf einfache Weise befestigbar und lösbar an dem Motor befestigen. Vorteilhaft ist dabei eine ausreichende Stabilität und auch Abdeckung des hinteren Endes des Motors gegeben, insbesondere auch mit ausreichender Belüftung durch die Motorabdeckung hindurch. Dafür kann sie mit bekannten Lüftungsöffnungen versehen sein. Die genannte formschlüssige Verbindung der Motorabdeckung mit der hinteren Lageraufnahme ist als Rastverbindung ausgebildet, und zwar als formschlüssige Rastverbindung. Dazu sind an der hinteren Lageraufnahme Rastvorsprünge ausgebildet. Vorteilhaft sind diese Rastvorsprünge für eine rastende haltende Wirkung entlang der Längsmittelachse ausgebildet, und zwar weg von der Pumpe bzw. weg von der vorderen Lageraufnahme. Die Rastverbindung mit den Rastvorsprüngen hält also die Motorabdeckung am Motor. So kann die Motorabdeckung in dieser Richtung gesichert sein.

Vorteilhaft sind es mindestens zwei Rastvorsprünge an der Lageraufnahme, so dass an der Motorabdeckung mindestens zwei längliche elastische Rastfederarme ausgebildet sind, von denen jeder mittels einem Rastende, also einer zur Rastung vorgesehenen Ausbildung des Endes des Rastfederarms, mit je einem Rastvorsprung der hinteren Lageraufnahme als Rastverbindung formschlüssig zusammenwirkt bzw. daran anliegt. Während also bevorzugt die Rastfederarme mit ihren Rastenden den elastischen bzw. bewegbaren Teil der Rastverbindung bilden, können die Rastvorsprünge an der hinteren Lageraufnahme den feststehenden und insbesondere unbeweglichen und nicht-elastischen bzw. nicht-flexiblen Teil dieser Rastverbindung bilden. Die Rastfederarme sind dabei relativ weit außen in radialer Richtung gesehen an der Motorabdeckung angeformt, was bedeutet, dass sie hier integral mit der Motorabdeckung verbunden sind, insbesondere einteilig und einstückig mit dieser hergestellt sind. Dabei sind sie in einem Bereich mit mehr als 50% der radialen Erstreckung der Motorabdeckung von der Längsmittelachse des Rotors entfernt mit der Motorabdeckung verbunden. Dies können unter Umständen sogar 70% oder mehr sein, vorteilhaft bis zu 90% der radialen Erstreckung der Motorabdeckung. Durch diese Anbringung der Rastfederarme relativ weit außen an der Motorabdeckung können sie möglichst lang ausgebildet sein und somit möglichst elastisch ausgebildet sein, auch bei Ausbildung aus an sich stabilem Material. Die länglichen Rastfederarme sind dabei in mindestens einer Richtung elastisch bewegbar, wobei sie durch diese Bewegbarkeit die Rastverbindung herstellen können bzw. die Rastenden der Rastfederarme können ausweichen beim Heranführen an die Rastvorsprünge, damit sie dann mit diesen zusammenwirken können bzw. hinter diese greifen können. Eine solche Bewegbarkeit der Rastfederarme bzw. ihrer Rastenden ist unterschiedlich möglich, wie nachfolgend noch im Detail erläutert wird. Entweder können sie dabei in einer Richtung parallel zur Längsmittelachse bewegbar sein oder im rechten Winkel dazu oder in radialer Richtung. Möglich ist auch eine Bewegbarkeit mit einer Kombination von mindestens zwei dieser Bewegungsmöglichkeiten bzw. Richtungen der Bewegbarkeit.

So kann mit der Erfindung eine Möglichkeit geschaffen werden, wie eine erfindungsgemäße Motorabdeckung schnell und einfach und insbesondere werkzeuglos an dem restlichen Motor, und zwar an der hinteren Lageraufnahme, befestigt werden kann, nämlich mittels einer Rastverbindung. Gleichzeitig kann dadurch auch ein schnelles und vorteilhaft werkzeugloses Lösen der Motorabdeckung vom Motor erreicht werden.

In Ausgestaltung der Erfindung können alle Rastfederarme identisch ausgebildet ein, was auch für die entsprechenden Rastvorsprünge gelten kann. Besonders vorteilhaft sind sie in Umfangsrichtung gleichmäßig verteilt um die hintere Lageraufnahme herum angeordnet. So kann eine gleichmäßige Befestigungswirkung der Motorabdeckung erreicht werden. Dabei können drei Rastfederarme vorgesehen sein, die dann um jeweils 120° zueinander verdreht angeordnet sind.

Die formschlüssigen Rastverbindungen können in einer Ausgestaltung der Erfindung derart ausgebildet sein, dass sie beim Aufstecken oder Heranführen der Motorabdeckung hinten an den Motor und an die hintere Lageraufnahme selbsttätig wirken bzw. sich ergeben. Dafür können Vorsprünge, Zentrierhilfen odgl. vorgesehen sein für eine genau geführte Bewegung der Motorabdeckung an dem Motor und/oder an die hintere Lageraufnahme.

In einer anderen Ausgestaltung der Erfindung ist vorgesehen, dass die Rastverbindung auch nach dem Heranführen der Motorabdeckung in ihre Endposition separat hergestellt werden muss, insbesondere durch Drücken auf oder gegen die Rastfederarme. Dies wird nachfolgend noch erläutert.

In einer Ausbildung der Erfindung kann vorgesehen sein, dass jeder Rastfederarm im Wesentlichen in einer Ebene verläuft. Eine solche Ebene kann parallel zur Längsmittelachse verlaufen und/oder die Längsmittelachse kann in dieser Ebene liegen. Eine Bewegbarkeit des Rastfederarms und somit auch des Rastendes ist dann im Wesentlichen oder zumindest auch in einer Richtung winklig bzw. rechtwinklig zur Längsmittelachse vorgesehen. Eine Bewegbarkeit des Rastendes in radialer Richtung bzw. weg von der Längsmittelachse und weg von dem Rastvorsprung ist dann nur über den Umweg des Schwenkens gegeben, aber keine Bewegung in genau der radialen Richtung. Die Rastenden werden dann zum Herstellen der Rastverbindung und auch zu ihrem Lösen von hinten gesehen sozusagen seitlich weggedrückt. Hierfür können an sich bekannte Anlaufschrägen odgl. vorgesehen sein, damit dies beim Herstellen der formschlüssigen Rastverbindung sozusagen selbsttätig erfolgt oder zumindest für ein manuelles Herstellen der formschlüssigen Rastverbindung erleichtert wird. Der Vorteil einer solchen Ausgestaltung der Rastfederarme liegt darin, dass sie dann eine gewisse Ausdehnung in Richtung parallel zur Längsmittelachse aufweisen können, wodurch sie sehr stabil sein können entlang dieser Richtung. Sie können dann die Motorabdeckung sehr fest an der Lageraufnahme befestigen bzw. die Rastverbindung kann eine hohe Haltekraft aufweisen, insbesondere durch die spezielle Ausgestaltung der Rastfederarme per se. Hier sind die Rastfederarme also relativ dünn in einer Umfangsrichtung und gleichzeitig zumindest teilweise relativ breit in einer Richtung parallel zur Längsmittelachse. Im breitesten Bereich kann ihre Breite zwischen fünfmal und zwanzigmal so groß sein wie ihre Dicke. Im schmalsten Bereich, insbesondere am oder nahe dem Rastende, kann die Breite der Dicke entsprechen oder bis zu dem Vierfachen der Dicke gehen.

In einer anderen alternativen Ausbildung der Erfindung sind die Rastfederarme in Richtung parallel zur Längsmittelachse durch ihre konstruktive Ausgestaltung beweglich, insbesondere sind ihre Rastenden auch in rein radialer Richtung beweglich. Dafür können sie in Richtung rechtwinklig zur Längsmittelachse und rechtwinklig zu ihrer eigenen Längserstreckung, also sozusagen in seitliche Richtung, relativ unbewegbar bzw. stabil ausgebildet sein. Diese Rastfederarme können von ihrer integralen Verbindung mit der Motorabdeckung, die wie vorbeschrieben vorteilhaft relativ weit außen ist, bis zu ihrem freien Ende, an dem das Rastende angeordnet ist, mindestens einmal gebogen sein. Vorteilhaft sind sie zweimal gebogen oder dreimal gebogen. Bevorzugt sind mehrfache Biegungen jeweils mit gegenläufiger Biegung durchgeführt, also sozusagen einfach S-förmig oder zweifach S-förmig. Durch derartige S-förmige oder mehrfache Biegungen ist es möglich, dass die Rastenden rein in radialer Richtung bewegbar sind und so beim Herstellen der Rastverbindung sowie auch bei deren Lösen von den Rastvorsprüngen an der hinteren Lageraufnahme entfernt werden können. Des Weiteren können die Rastfederarme hierbei weniger stark aus einer Ebene der Motorabdeckung herausstehen, die rechtwinklig zur Längsmittelachse verläuft und sozusagen im Wesentlichen das hintere Ende des Motors abdeckt. So kann eine Bauhöhe entlang der Längsmittelachse möglicherweise geringer sein als bei der vorgenannten alternativen Ausbildung der Erfindung.

In vorteilhafter Weiterbildung der Erfindung kann zur vereinfachten Herstellung der Rastverbindung am freien Ende der Rastfederarme eine Anschrägung vorgesehen sein, die ein Rastende des Rastfederarms bildet. Durch diese Anschrägung kann es erleichtert werden, dass das Ende des Rastfederarms dem Rastvorsprung an der hinteren Lageraufnahme ausweicht und so selbsttätig beim Heranführen der Motorabdeckung an den Motor bzw. von hinten an die hintere Lageraufnahme die Rastverbindung hergestellt wird. So braucht der Rastfederarm nicht extra bewusst zur Seite bewegt zu werden, was den Montagevorgang erleichtert. Eine solche Anschrägung kann in einer Richtung von der hinteren Lageraufnahme bis zu einer vorderen Lageraufnahme des Rotors von der Längsmittelachse weg weisen bzw. sie kann zu der herangeführten Motorabdeckung hin weisen. An dem Rastvorsprung an der hinteren Lageraufnahme kann vorteilhaft eine entsprechende korrespondierende Anschrägung vorgesehen sein, so dass zum Ausweichen des Rastendes des Rastfederarms die beiden Anschrägungen zusammenwirken.

In vorteilhafter Weiterbildung der Erfindung kann jeder Rastfederarm in seiner Breite abnehmen von seiner Verbindung mit der Motorabdeckung bis hin zu dem freien Ende mit dem Rastende. Dies ermöglicht zum Einen eine gewisse Materialersparnis. Zum Anderen kann so die Bewegbarkeit bzw. Biegbarkeit des Rastfederarms beeinflusst bzw. eingestellt werden, wie es sowohl für das Herstellen der Rastverbindung als auch vor allem für das Halten der Motorabdeckung an dem Motor als vorteilhaft angesehen wird. Diese Änderung bzw. Abnahme der Breite kann so sein, dass bei der zweiten vorgenannten Ausbildung der Erfindung die beiden Seitenkanten des Rastfederarms in etwa in radialer Richtung verlaufen und zur Längsmittelachse hin zeigen. Durch eine geringere Breite des Rastfederarms nahe seinem Ende bleibt auch genügend Platz im Mittelbereich der Motorabdeckung, um integral verbunden zu bleiben, damit die Motorabdeckung auch in diesem Bereich stabil ist. In diesem Bereich kann auch vorgesehen sein, dass die Motorabdeckung hinten an der Lageraufnahme direkt anliegt für eine höhere Gesamtstabilität, also nicht nur mittels der Rastverbindung selbst mit der hinteren Lageraufnahme verbunden ist.

Bei der ersten vorgenannten Alternative zur Ausbildung der Rastfederarme, die sozusagen in einer Ebene verlaufen, durch welche die Längsmittelachse verläuft, kann die Abnahme der Breite von radial außen nach radial innen dem Zweck dienen, dass im radial äußeren Bereich üblicherweise mehr Bauraum vorhanden ist als radial innen. Dies liegt vor allem daran, dass die hintere Lageraufnahme üblicherweise mit den hintersten Bereich des Motors bildet, und eine weitere Vergrößerung der Baulänge des Motors in dieser Richtung unerwünscht wäre. So wird der verfügbare Bauraum jeweils gut ausgenutzt, um den Rastfederarm möglichst stabil auszubilden in Richtung entlang der Längsmittelachse, da die Rastfederarme durch die Rastverbindung gerade in dieser Richtung die Motorabdeckung möglichst fest am Motor halten sollen.

Allgemein kann vorgesehen sein, dass eine Abnahme der Breite der Rastfederarme in etwa gleichmäßig ist, insbesondere die Breite stetig bzw. streng monoton stetig abnimmt.

In vorteilhafter Weiterbildung der Erfindung kann vorgesehen sein, dass an jedem freien Ende jedes Rastfederarms ein abstehender Vorsprung ausgebildet ist, der nach außen bzw. nach hinten absteht, und der als manuelle Handhabe zum manuellen Lösen der Rastverbindung dienen kann. So kann die Rastverbindung schnell gelöst werden, des Weiteren wird dann auch nicht einmal ein einfaches Werkzeug wie beispielsweise ein Schraubendreher benötigt. Ein solcher Vorsprung kann in etwa parallel zur Längsmittelachse verlaufend von dem Rastfederarm abstehen und/oder in etwa in rechtem Winkel zu der Richtung verlaufen, in der das Rastende bewegt wird zum Lösen der Rastverbindung.

Eine Ausgestaltung der Rastvorsprünge an der Lageraufnahme kann so sein, dass sie mit einer Länge zwischen 1% und 20%, insbesondere bis zu 10%, des Durchmessers der hinteren Lageraufnahme in radialer Richtung abstehen. Dies ermöglicht eine stabile Rastverbindung bei gleichzeitig nicht sehr störender Größe der Rastvorsprünge. Wenn vorteilhaft sichergestellt werden kann, dass die Rastfederarme, insbesondere bei der zweiten vorgenannten alternativen Ausbildung mit mehrfacher Biegung in ihrem Verlauf, in radialer Richtung zur Längsmittelachse hin drücken, können sie ein selbsttätiges Lösen der Rastverbindung erschweren. Dann muss die Überlappung von Rastvorsprung und Rastende des Rastfederarms nicht so groß sein, um dies zu verhindern.

In weiterer vorteilhafter Ausgestaltung der Erfindung kann vorgesehen sein, dass von der Motorabdeckung mindestens ein Haltezapfen absteht, vorteilhaft mindestens zwei Haltezapfen. Dieser Haltezapfen zeigt von der Motorabdeckung in Richtung hin zu dem vorderen Ende des Rotors und verläuft in etwa oder genau parallel zur Längsmittelachse. Diese Haltezapfen können dazu dienen, ein Verdrehen der Motorabdeckung um die Längsmittelachse herum oder ein Verschieben in rechtem Winkel dazu zu verhindern. Des Weiteren kann so erreicht werden, dass die Motorabdeckung aus der Endposition in der gemeinsamen Baueinheit heraus nur in Richtung entlang der Längsmittelachse von dem Motor weg bewegt werden kann, und dann reicht es, wenn die Rastverbindung dieses alleine verhindert. Ein solcher Haltezapfen bzw. vorteilhaft alle Haltezapfen kann in einer Ausnehmung in den Stator eingreifen, insbesondere als Löcher in dem Statorblechpaket. Des Weiteren kann eine Länge mindestens eines Haltezapfens so ausgebildet sein, dass die Haltezapfen zuerst in die Ausnehmungen eingreifen und dann erst die Rastverbindung hergestellt wird bzw. sich erst dann die Rastenden der Rastfederarme an die Rastvorsprünge bewegen bzw. diese berühren, möglicherweise auch die jeweiligen Anschrägungen. Dies weist den großen Vorteil auf, dass dann eine genau geführte Bewegung der Motorabdeckung relativ zum Motor bewirkt worden ist oder bewirkt wird, wenn die Rastverbindung hergestellt wird, was deren exakte vorgegebene Herstellung bewirkt bzw. erleichtert. Solche Haltezapfen sowie die jeweiligen korrespondierenden Ausnehmungen können mit Einführanschrägungen odgl. versehen sein oder konisch ausgebildet sein für ein leichteres Einführen. Dies ist aus dem Stand der Technik von Zentrierzapfen odgl. bekannt.

In vorteilhafter Ausgestaltung der Erfindung deckt die Motorabdeckung die hintere Lageraufnahme vollständig ab. Des Weiteren deckt sie das hintere axiale Ende des Motors ab. Vorteilhaft übergreift sie den Motor bzw. einen Teil des Stators oder dessen Statorblechpakets mit den Statorwindungen nach außen hin. Entweder kann sie ihn vollständig übergreifen, so dass eine elektrische Isolierung möglichst gut erreicht wird. Alternativ kann sie mindestens die Hälfte, vorteilhaft bis zu 80% oder bis zu 90%, des Statorblechpakets nach außen freilassen. Dann kann dessen Kühlung durch Umgebungsluft verbessert sein, um ein Überhitzen des Motors im Betrieb zu verringern bzw. zu verhindern.

In einer möglichen Weiterbildung der Erfindung kann vorgesehen sein, insbesondere bei der zweiten Alternative der Ausbildung der Rastfederarme, dass bei einem Heranführen der Motorabdeckung von hinten diese zwar in die Endposition rückt, insbesondere auch, indem die vorstehend beschriebenen vorteilhaften Haltezapfen in Ausnehmungen im Stator eingreifen, die Rastverbindungen aber noch nicht oder noch nicht alle vollständig hergestellt sind. Sie müssen dann zusätzlich manuell noch durch Drücken gegen die Rastfederarme, insbesondere im Bereich von deren Rastenden, in axialer Richtung und/oder in radialer Richtung des Rotors hergestellt werden. Dies macht dann etwas mehr Aufwand bei Montage des Motors, gleichzeitig kann dann aber gegebenenfalls eine Ausgestaltung bzw. Festigkeit der Rastfederarme verbessert werden.

Alternativ zu einer Ausgestaltung der vorgenannten Haltezapfen, die in Ausnehmungen im Stator eingreifen, kann auch ein Außenrand der Motorabdeckung den Stator ganz außen übergreifen in der Art, dass dies nur in einer einzigen genau definierten Position möglich ist. Auch dadurch kann, beispielsweise bei generell in etwa rechteckiger bzw. quadratischer Außenform des Stators, eine Verdrehsicherung erreicht werden.

Ein Rastfederarm kann so ausgebildet sein, dass er von seiner integralen Verbindung mit der Motorabdeckung beginnend zuerst in genau radialer Richtung verläuft, dann in einer Biegung, insbesondere mit etwa 90°, hin zum vorderen Ende des Rotors gebogen ist, wobei er daran anschließend in einer weiteren Biegung, insbesondere wiederum etwa 90° und mit weitem Radius, hin zur Längsmittelachse gebogen ist. In weiterer Ausgestaltung kann der Rastfederarm nach der letzten Biegung noch einmal wiederum um etwa 90° weit gerundet gebogen sein und dann in Richtung etwa parallel zur Längsmittelachse und weg vom Rotor weisen. Hieran anschließend kann das Rastende am Rastfederarm angeordnet sein, vorzugsweise wiederum mit einer Biegung um etwa 90° hin zur Längsmittelachse in der Art, dass das Rastende hin zur Längsmittelachse weist, vorzugsweise in etwa rechtwinklig dazu zeigt. Somit zeigt das Rastende in dieselbe Richtung wie der Beginn des Verlaufs des Rastfederarms an der Verbindung mit der Motorabdeckung mit einer weitläufig geschwungenen Biegung dazwischen, vorteilhaft in den Motor hinein bzw. hin zum vorderen Ende des Rotors. Dieser gebogene Verlauf bewirkt die erfindungsgemäße Bewegbarkeit bzw. Biegbarkeit des Rastfederarms.

In weiterer Ausgestaltung der Erfindung können die Rastfederarme in der Art ausgebildet sein, dass sie in einer Grundstellung, wenn die Motorabdeckung nicht auf den Motor aufgesetzt ist und die Rastfederarme nicht kraftbelastet oder eingerastet sind, ein Abstand zwischen den Rastenden und den Rastvorsprüngen vorgesehen ist, der weg entlang der Richtung der Längsmittelachse weist. Vorzugsweise kann ein solcher Abstand 0,2 cm bis 2 cm bzw. 2% bis 30% der Länge der Rastfederarme betragen. Bei dieser Ausgestaltung der Motorabdeckung muss zwar nach dem Ansetzen der Motorabdeckung an das hintere Ende des Motors jede Rastverbindung hergestellt werden, vorzugsweise durch manuelles Drücken auf die Rastfederarme, insbesondere im Bereich der Rastenden, möglicherweise durch Drücken an den zuvor beschriebenen abstehenden Vorsprüngen. Dadurch kann aber erreicht werden, dass die Rastfederarme die Motorabdeckung mit Vorspannung und somit mit großer Haltekraft am Motor halten.

Die erfindungsgemäße Pumpe weist ein Pumpenteil und einen zuvor beschriebenen Motor auf, wobei der Motor derart an dem Pumpenteil angeordnet und befestigt ist, dass der Motor und das Pumpenteil die Pumpe als Baueinheit bilden. Der Motor bildet dabei den Antrieb für das Pumpenteil bzw. für einen darin vorgesehenen im Keller im Fall einer Ausgestaltung der Pumpe als Impellerpumpe.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine Schrägansicht einer Baueinheit mit einem Pumpenteil und einem erfindungsgemäßen Motor als erfindungsgemäße Pumpe,
- Fig. 2: eine Rückansicht auf die Pumpe mit dem Motor und einer Motorabdeckung,
- Fig. 3: einen Schnitt durch den erfindungsgemäßen Motor mit Motorabdeckung,
- Fig. 4: in der Perspektive aus Fig. 3 einen weiteren Schnitt durch die Motorabdeckung,
- Fig. 5: eine Rückansicht einer alternativen Motorabdeckung mit anders ausgebildeten Rastfederarmen,
- Fig. 6: eine Vergrößerung aus Fig. 5 mit Darstellung einer Bewegung eines der Rastfederarme,
- Fig. 7: eine seitliche Schnittdarstellung durch die Motorabdeckung aus Fig. 5, und
- Fig. 8: eine weitere Darstellung der Bewegung des Rastfederarms.

### DETAILLIERTE BESCHREIBUNG DER AUSFÜHRUNGSBEISPIELE

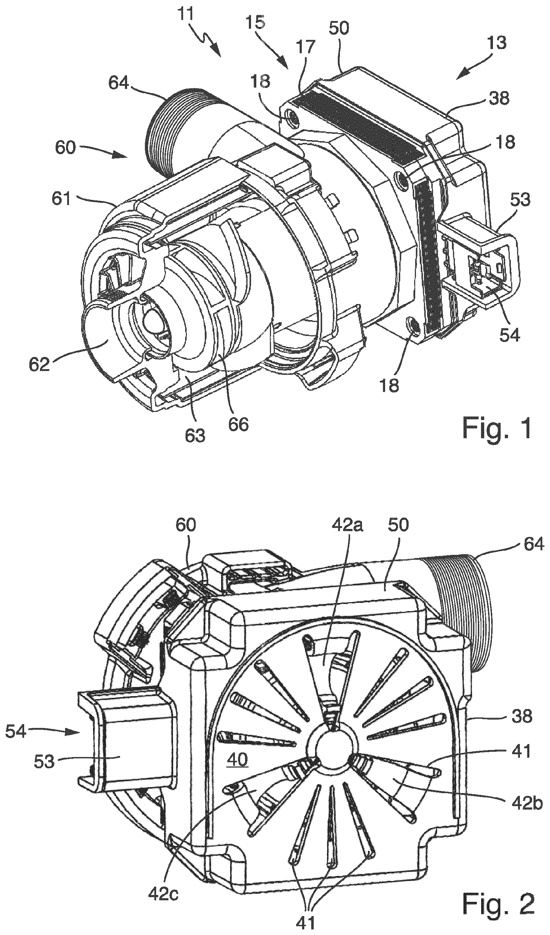

In der Fig. 1 ist eine erfindungsgemäße Pumpe 11 als Baueinheit dargestellt mit einem Motor 13, der hinten an einen Pumpenteil 60 anmontiert ist, so dass die beiden eben die Baueinheit 11 bilden. Der Pumpenteil 60 ist im Wesentlichen ausgebildet wie aus dem Stand der Technik bekannt, beispielsweise aus der eingangs genannten EP 3008346 B1. Er weist ein Pumpengehäuse 61 auf mit einem Einlass 62 in eine Pumpenkammer 63. Darin dreht sich ein Impeller 66 und fördert das Wasser durch die Pumpenkammer 63 hin bis zu einem Auslass 64. Es handelt sich somit um eine Impellerpumpe. In der Pumpenkammer 63 kann ein Heizelement vorgesehen sein, was hier aber keine Rolle spielt.

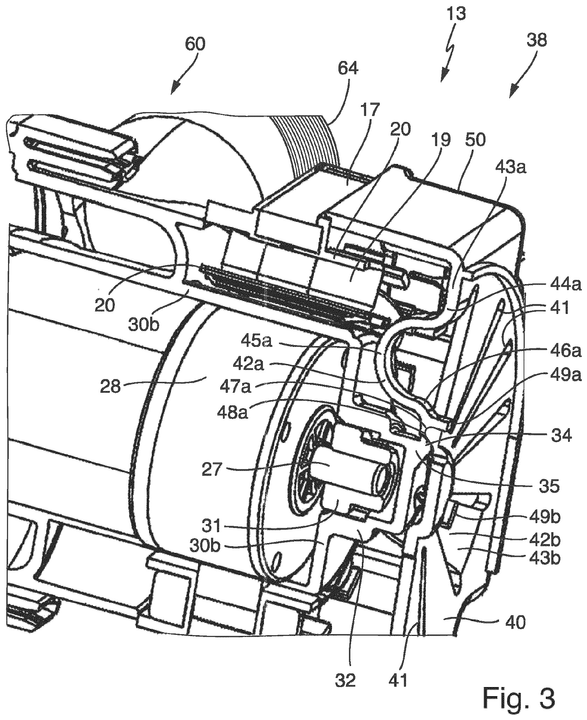

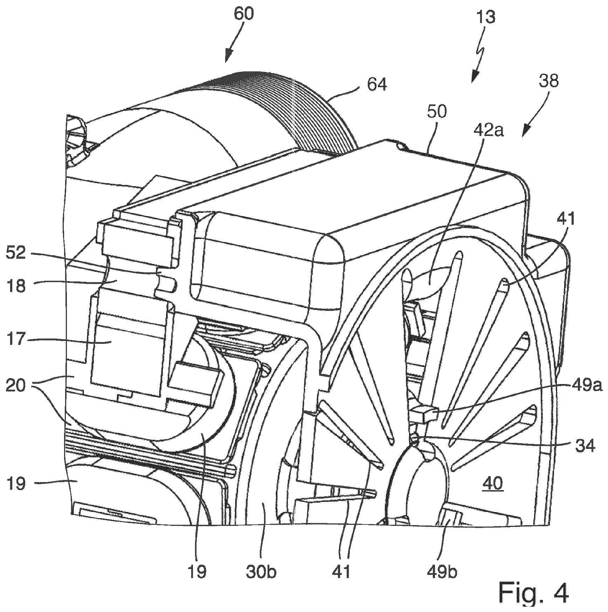

Der Motor 13 weist einen Stator 15 auf mit einem Statorblechpaket 17, siehe auch die vergrößerten Darstellungen der Fig. 3 und 4. In dem im Wesentlichen quadratisch ausgebildeten Statorblechpaket 17 mit abgeschrägten Ecken sind in den Eckbereichen Halteausnehmungen 18 als durchgehende Löcher oder Bohrungen vorgesehen, deren Funktion nachfolgend noch näher erläutert wird. Die Fig. 3 und 4 zeigen die Statorwindungen 19, die an Windungshaltern 20 befestigt sind. Diese Windungshalter 20 sind wiederum mit dem Statorblechpaket 17 verbunden. Die Statorwindungen 19 sind relativ nahe um ein Gehäuse 30b des Motors 13 herum angeordnet.

In dem Gehäuse 30b ist ein Rotor 28 angeordnet mit einer durchgehenden Rotorwelle. Die Rotorwelle weist ein hinteres Wellenende 27 auf, welches mittels eines Lagers 31 in einer hinteren Lageraufnahme 30a angeordnet ist. Die hintere Lageraufnahme 30a ist Teil des Gehäuses 30b. Sie kann in etwa Topfform aufweisen mit einem hinteren Aufnahmetopf 32. An dem Aufnahmetopf 32 sind in Umfangsrichtung gleichmäßig verteilt drei Rastvorsprünge 34 vorgesehen, wie sie eingangs erläutert worden sind. Die Rastvorsprünge 34 weisen Anschrägungen 35 auf nach hinten und schräg radial außen. Nach vorne zu sind sie abgeflacht in radialer Richtung, um eine möglichst gute Rastwirkung zu erreichen.

Eine flächige Motorabdeckung 38 ist von hinten an den Motor 13 angesetzt und überdeckt somit dessen hintere Seite bzw. bildet sie. Die Motorabdeckung 38 besteht somit aus einer Rückseite 40, die im Wesentlichen in einer Fläche senkrecht zur Längsmittelachse des Rotors 28 verläuft. Des Weiteren weist die Motorabdeckung 38 einen Außenrahmen 50 auf bzw. die Rückseite 40 geht direkt in den Außenrahmen 50 über. Dieser Außenrahmen 50 verläuft gemäß Fig. 2 mit in etwa quadratischer Form mit Einschnitten in den Eckbereichen und überdeckt den Teil der Statorwindungen 19, der nach hinten unter dem Statorblechpaket 17 hervorsteht. Des Weiteren übergreift der Außenrahmen 50 mit einer vorderen Kante noch das Statorblechpaket 17 ein kleines Stück. Dabei greifen gemäß Fig. 4 angeformte Haltezapfen 52 der Motorabdeckung 38 in die zuvor genannten Halteausnehmungen 18 ein. Das Einführen wird durch die dargestellte konische Ausgestaltung der Haltezapfen 52 erleichtert. So wird eine genaue Position sowie vor allem eine Verdrehsicherung und auch eine Sicherung gegen jegliche Verschiebung in Richtung rechtwinklig zur Längsmittelachse des Rotors 28 verhindert. Dies kann zusätzlich oder alternativ auch durch das Übergreifen des vorderen Randes des Außenrahmens 50 über das Statorblechpaket 17 oder die Windungshalter 20 erfolgen.

Gemäß Fig. 1 ist an der Motorabdeckung 38 bzw. am Außenrahmen 50 ein Buchsengehäuse 53 angeformt, in welchem eine Buchse 54 für den elektrischen Anschluss des Motors 13 bzw. der gesamten Baueinheit 11 vorgesehen ist. Weist die Pumpe 60 das vorgenannte Heizelement auf, so kann auch dessen elektrischer Anschluss vorteilhaft über die Buchse 54 erfolgen.

Während die Haltezapfen 52 in den Halteausnehmungen 18 des Statorblechpakets 17 das Verdrehen oder Verschieben der Motorabdeckung 38 am Motor 13 verhindern, wird eben noch die erfindungsgemäße formschlüssige Rastverbindung benötigt, um das Entfernen der Motorabdeckung 38 entlang der Längsmittelachse weg vom Motor zu verhindern. Dafür weist die Motorabdeckung 38 an der Rückseite 40 drei Rastfederarme 42a, 42b und 42c auf. Diese sind durch jeweils Lüftungsschlitze 41 voneinander getrennt. Aus der Fig. 2 ist gut zu ersehen, dass sowohl die Rastfederarme 42a bis 42c als auch die Lüftungsschlitze 41 sozusagen genau in radialer Richtung verlaufen bzw. ausgebildet sind. Die Schnittdarstellung der Fig. 3 zeigt, dass der Rastfederarm 42a in einem Verbindungsbereich 43a mit der Motorabdeckung 38 bzw. der Rückseite 40 verbunden ist. Die Teile sind integral in einem einzigen Kunststoffspritzvorgang hergestellt. Von dem Verbindungsbereich 43a ausgehend ist der Rastfederarm 42a in einer ersten Biegung 44a, die um etwa 80° geht, nach vorne hin gebogen mit einer etwas größeren Biegung. Direkt an diese erste Biegung 44 anschließend ist der Rastfederarm 42a gegensinnig mit einer zweiten Biegung 45a gebogen, und zwar um in etwa doppelt so weit, also etwa 160°. Die erste Biegung 44a und zweite Biegung 45a sind vorteilhaft gleichmäßig.

Direkt an diese zweite Biegung 45a anschließend ist der Rastfederarm 42a in einer dritten Biegung 46a wiederum gegensinnig gebogen um etwa 80°, vorteilhaft etwas enger gebogen als an der ersten Biegung 44a. Ein an die dritte Biegung 46a anschließendes Rastende 47a des Rastfederarms 42a weist dann, obwohl es relativ kurz ist, vorteilhaft wieder in radiale Richtung. Seine Verlängerung sollte hier genau auf die Längsmittelachse des Rotors 28 zeigen.

Das Rastende 47 hat nach links unten weisend eine Anschrägung 48, beispielsweise mit einem Winkel von etwa 45° zur Längsmittelachse. Der Winkel dieser Anschrägung 48 sollte in etwa parallel zu dem Winkel der Anschrägung 35 des Rastvorsprungs 34 sein. Das Rastende 47 greift hinter den Rastvorsprung 34, die Rastverbindung ist also hergestellt. Beim Herstellen dieser Rastverbindung kann das Rastende 47a mit seiner Anschrägung 48a gut an der Anschrägung 35 des Rastvorsprungs 34 entlang gleiten, wie dies für Rastverbindungen grundsätzlich bekannt ist. Dabei weicht das Rastende 47a aufgrund der Elastizität des Rastfederarms 42a in radialer Richtung weg von dem Rastvorsprung 34 aus, bis es hinter diesen greifen kann.

Zum Herstellen der Rastverbindung ist kurz vor dem Rastende 47a ein in axialer Richtung abstehender Vorsprung 49a angeformt, der eine Länge von 0,5 cm bis 1 cm aufweisen kann. Durch Drücken auf diesen Vorsprung 49a in axialer Richtung und in radialer Richtung kann das Rastende 47a auf alle Fälle sicher hinter den Rastvorsprung 34 gebracht werden. Aus der Fig. 3 ist zu ersehen, dass der Rastfederarm 42a aufgrund seiner insgesamt radialen Erstreckung und seiner Herstellung aus entsprechend elastischem, aber gleichzeitig stabilem Kunststoff eine gewisse Bewegbarkeit seines Rastendes 47a in axialer Richtung aufweist. In diese Richtung soll der Rastfederarm 42a aber gleichzeitig die Motorabdeckung 38 an dem Motor 13 haltern und gegen ein Entfernen sichern.

Durch die mehrfach gebogene Ausgestaltung des Rastfederarms 42a mit den drei Biegungen 44a, 45a und 46a ist eine gewisse Elastizität in radialer Richtung gegeben, die benötigt wird, damit das Rastende 47a beim Herstellen der Rastverbindung etwas in radialer Richtung bewegt werden kann, um dann hinter den Rastvorsprung 34 zu greifen. Diese Bewegbarkeit bzw. Biegbarkeit in radialer Richtung zum Herstellen der Rastverbindung beeinträchtigt per se die Haltewirkung in axialer Richtung nicht, wenngleich dadurch natürlich der Rastfederarm 42a insgesamt etwas weniger steif ist.

Durch das Vorsehen von drei Rastfederarmen 42a, 42b und 42c kann eine insgesamt ausreichend hohe Haltekraft für die Motorabdeckung 38 am Motor 13 erreicht werden. Die genaue Ausgestaltung der Rastfederarme 42a bis 42c spielt hier auch eine große Rolle.

Des Weiteren kann vorgesehen sein, dass in einer einfachen Ausgestaltung die Rastfederarme 42a bis 42c so ausgebildet sind, dass die Rastverbindung beim Aufschieben der Motorabdeckung 38 von hinten auf den Motor 13, wobei die Haltezapfen 52 in die Halteausnehmungen 18 eingreifen, automatisch hergestellt wird. Die Rastenden 47 der Rastfederarme 42 greifen also automatisch und selbsttätig hinter die jeweiligen Rastvorsprünge 34 am Aufnahmetopf 32. Dann ist allerdings nicht möglich, dass die Rastfederarme 42a bis 42c in der Position bzw. Endposition der hergestellten Rastverbindung vorgespannt sind derart, dass sie durch ihre eigene Vorspannung die Motorabdeckung 38 noch fester gegen den Motor 13 drücken. Ist dies gewünscht, können die Rastfederarme 42a bis 42c so ausgebildet sein, dass sie in der Endposition der Motorabdeckung 38 am Motor 13 gemäß der Fig. 4 mit ihren Rastenden 47 noch nicht hinter die Rastvorsprünge 34 greifen. Sie können entweder daran anliegen oder sogar noch ein Stück in axialer Richtung davon entfernt sein in einer Grundstellung der Rastfederarme 42. Dann wird durch Drücken gegen die Vorsprünge 49 in axialer Richtung und etwas in radialer Richtung nach außen jeder Rastfederarm 42 hin zum vorderen Ende des Motors bewegt und somit, insbesondere mithilfe der Anschrägungen 48 und 35, das jeweilige Rastende 47 hinter den Vorsprung 34 gedrückt. Dabei werden die Rastfederarme 42 vorgespannt bzw. erhalten eine Vorspannung, die dann als permanente Kraft die Motorabdeckung 38 gegen den Motor 13 drückt. So wird eine stabile und sichere sowie dauerhafte Verbindung erreicht. Anders als bei einer automatisch hergestellten Rastverbindung beim Heranführen der Motorabdeckung 38 von hinten an den Motor 13 ist dann ein gewisser Montageaufwand notwendig, entweder von einem Automaten oder manuell, und zwar durch entsprechendes Drücken gegen die Vorsprünge 49. Dieser Aufwand ist aber nicht sehr groß und kann nicht falsch erfolgen. Des Weiteren kann durch die dadurch erzielte Vorspannung an den Rastfederarmen 42 die Befestigung der Motorabdeckung 38 am Motor 13 sehr stabil erfolgen.

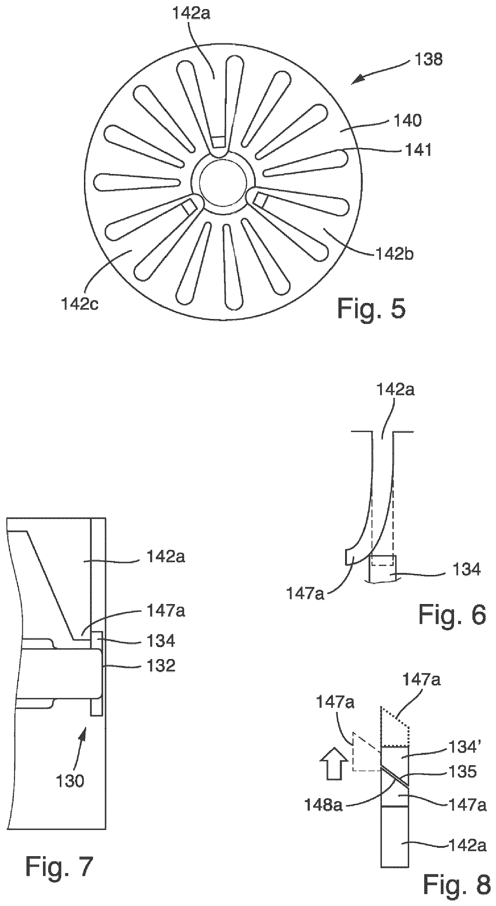

Eine alternatives zweites Ausführungsbeispiel für Rastfederarme ist in den Fig. 5 bis 7 dargestellt. Die Rückansicht der Motorabdeckung 138 mit der Rückseite 140 gemäß Fig. 5 zeigt, dass hier auch einerseits Lüftungsschlitze 141 in radialer Richtung vorgesehen sind. Des Weiteren sind drei Rastfederarme 142a, 142b und 142c vorgesehen, die jeweils identisch ausgebildet sind. Diese Rastfederarme, die in Fig. 7 von der Seite dargestellt sind, weisen eine Dicke auf, die vorteilhaft entsprechend der Materialdicke der sonstigen Motorabdeckung 138 entspricht. Allerdings sind sie sozusagen breiter, wie die Fig. 7 zeigt. Insbesondere sind sie sozusagen im Vergleich zu den Rastfederarmen 42 der Fig. 1 bis 4 um 90° verdreht und weisen keine Biegungen auf, sondern verlaufen vollkommen gerade. Der Vergleich der Fig. 5 und 7 zeigt, dass diese Rastfederarme 142a bis 142c in radialer Richtung überhaupt nicht beweglich bzw. biegbar sind. Des Weiteren sind sie in axialer Richtung ebenfalls kaum biegbar bzw. bewegbar, da hier ihre große Breite eine große Stabilität in axialer Richtung verleiht. Deswegen ist aus der Fig. 7 auch ersichtlich, dass die dortige formschlüssige Rastverbindung, bei der ein Rastende 147a des Rastfederarms 142a hinter den Rastvorsprung 134 am Aufnahmetopf 132 der hinteren Lageraufnahme 130 greift, nicht so erfolgen kann wie zu der ersten Ausgestaltung beschrieben. Dazu ist gemäß der vergrößerten Rückansicht der Fig. 6 schematisch dargestellt, dass die Rastfederarme 142a bis 142c in einer Richtung quer zu ihrer Längserstreckung, welche rechtwinklig zur Längsmittelachse verläuft, bewegbar bzw. biegbar sind. In der Fig. 6 ist durchgezogen dargestellt, wie der Rastfederarm 142a nach links zur Seite gebogen wird beim Heranführen der Motorabdeckung 138 von hinten an den Motor. Dabei wird das Rastende 147a so weit nach links gebogen, dass es seitlich an dem Rastvorsprung 134 vorbeipasst. In der Endposition gemäß Fig. 7 ist der Rastfederarm 142a dann wieder in seine Grundstellung zurückgebogen, die in Fig. 6 gestrichelt dargestellt ist, wobei er dabei mit seinem Rastende 147a hinter den Rastvorsprung 134 greift.

Da diese Ausweichbewegung des Rastfederarms 142a nicht mit denselben Anschrägungen entsprechend dem ersten Ausführungsbeispiel erreicht werden kann, kann entweder vorgesehen sein, dass mittels ähnlicher Vorsprünge wie die Vorsprünge 49 des ersten Ausführungsbeispiels das Ende des Rastfederarms 142a zur Seite gebogen wird beim Heranführen der Motorabdeckung 138. Dann ist vorteilhaft eine manuelle Montage notwendig mit jeweiligem einzelnem Herstellen der formschlüssigen Rastverbindungen. Dabei ist vorteilhaft vorgesehen, dass Haltezapfen der Motorabdeckung 138 bereits in Halteausnehmungen 18 des Statorblechpakets 17 eingreifen, um ein Verdrehen der Motorabdeckung 138 relativ zu dem Motor zu verhindern.

Alternativ können wiederum Anschrägungen vorgesehen sein, um die in Fig. 6 dargestellte Ausweichbewegung des Endbereichs des Rastfederarms 142a bei der axialen Bewegung zu bewirken, wobei dann die Anschrägungen ausgebildet sein können wie in Fig. 8 dargestellt. Dies ist eine Ansicht von der Längsmittelachse aus gesehen in radialer Richtung und zeigt einerseits den Vorsprung 134 mit einer Anschrägung 135 und andererseits den Rastfederarm 142a mit einer Anschrägung 148a. Der Rastfederarm 142a wird in der axialen Bewegungsrichtung entsprechend dem Pfeil herangeführt, und durch das Aneinandergleiten der Anschrägungen 135 einerseits und 148a andererseits wird eine Ausweichbewegung des Endbereichs des Rastfederarms 142a bewirkt. In der gestrichelt dargestellten ausgelenkten Position kann dann der Rastfederarm 142a bzw. sein Rastende 147a seitlich an dem Vorsprung 134 in axialer Richtung vorbeibewegt werden. Ist er daran vorbeibewegt, kann er dahinter in die punktiert dargestellte Grundstellung zurückfedern und liegt dabei an der der Anschrägung 135 gegenüberliegenden Seite des Rastvorsprungs 134 formschlüssig an.

Durch dieses zweite Ausführungsbeispiel ist erkennbar eine höhere Kraftaufnahme in axialer Richtung erreichbar bzw. in axialer Richtung ist die Rastverbindung stärker. Gleichzeitig kann aber sein, dass der Montageaufwand etwas erhöht ist.

## Patentansprüche

1. Motor (13), insbesondere als Baueinheit mit einer Pumpe (11) für Flüssigkeit als Flüssigkeitspumpe, wobei der Motor (13) aufweist:
- einen Stator (15), insbesondere mit einem Statorblechpaket (17) und Statorwindungen (19) an dem Statorblechpaket (17),
- einen Rotor (28) mit einem vorderen Ende und einem hinteren Ende,
- eine Rotorlagerung (31) für den Rotor (28), wobei die Rotorlagerung (31) eine hintere Lageraufnahme (30a, 130) für das hintere Ende des Rotors (28) aufweist,
- eine Motorabdeckung (38, 138) im Bereich der hinteren Lageraufnahme (30a, 130), wobei
- die Motorabdeckung (38, 138) mit mindestens der hinteren Lageraufnahme (30a, 130) formschlüssig verbunden ist, wobei diese formschlüssige Verbindung derart ist, dass die Motorabdeckung (38, 138) gegen eine Bewegung in axialer Richtung des Motors (13) weg von dem Motor (13) gesichert ist,
- die formschlüssige Verbindung als formschlüssige Rastverbindung ausgebildet ist mit Rastvorsprüngen (34, 134) an der Lageraufnahme (30a, 130),
- an der Motorabdeckung (38, 138) mindestens zwei elastische Rastfederarme (42, 142) ausgebildet sind, von denen jeder mittels eines Rastendes (47, 147) mit einem der Rastvorsprünge (34, 134) als Rastverbindung zusammenwirkt,
- die Rastfederarme (42, 142) in einem Bereich (43) mit der Motorabdeckung (38, 138) integral verbunden sind, der mehr als 50% der radialen Erstreckung der Motorabdeckung (38, 138) von der Längsmittelachse des Rotors (28) entfernt angeordnet ist, insbesondere zwischen 70% und 90% der radialen Erstreckung der Motorabdeckung (38, 138),
- die Rastfederarme (42, 142) länglich sind und in mindestens einer Richtung elastisch bewegbar sind,
**dadurch gekennzeichnet, dass** die Rastfederarme (42, 142) in radialer Richtung hin zur Längsmittelachse verlaufen.

2. Motor nach Anspruch 1, **dadurch gekennzeichnet, dass** die Rastfederarme (42, 142) sämtlich identisch ausgebildet sind, vorzugsweise in Umfangsrichtung gleichmäßig verteilt um die hintere Lageraufnahme (30a, 130) herum angeordnet sind, wobei insbesondere drei Rastfederarme (42, 142) vorgesehen sind.

3. Motor nach Anspruch 1 oder 2, **dadurch gekennzeichnet, dass** jeder Rastfederarm (142) im Wesentlichen in einer Ebene verläuft, insbesondere in einer Ebene parallel zur Längsmittelachse, in der die Längsmittelachse liegt.

4. Motor nach Anspruch 1 oder 2, **dadurch gekennzeichnet, dass** jeder Rastfederarm (42) von seiner integralen Verbindung (43) mit der Motorabdeckung (38) bis zu einem freien Ende mit dem Rastende (47) mindestens einmal gebogen ist, insbesondere zweimal oder dreimal mit jeweils gegenläufiger Biegung (44, 45, 46) gebogen ist, vorzugsweise S-förmig gebogen ist.

5. Motor nach Anspruch 4, **dadurch gekennzeichnet, dass** durch die Biegungen (44, 45, 46) das freie Ende (47) des Rastfederarms (42) eine elastische Bewegbarkeit bzw. Biegbarkeit in Richtung parallel zur Längsmittelachse aufweist sowie eine elastische Bewegbarkeit bzw. Biegbarkeit in radialer Richtung aufweist.

6. Motor nach einem der vorhergehenden Ansprüche, **dadurch gekennzeichnet, dass** am freien Ende des Rastfederarms (42, 142) als Rastende (47, 147) eine Anschrägung (48, 148) vorgesehen ist, wobei vorzugsweise die Anschrägung (48, 148) in Richtung von der hinteren Lageraufnahme (30a, 130) bis zu einer vorderen Lageraufnahme von der Längsmittelachse weg weist.

7. Motor nach einem der vorhergehenden Ansprüche, **dadurch gekennzeichnet, dass** jeder Rastfederarm (42, 142) in seiner Breite abnimmt von seiner integralen Verbindung mit der Motorabdeckung (38, 138) bis hin zum freien Ende, insbesondere gleichmäßig.

8. Motor nach einem der vorhergehenden Ansprüche, **dadurch gekennzeichnet, dass** am freien Ende jedes Rastfederarms (42, 142) ein abstehender Vorsprung (49) ausgebildet ist, insbesondere in etwa parallel zur Längsmittelachse verlaufend, der nach hinten absteht als manuelle Handhabe zum manuellen Lösen der Rastverbindung.

9. Motor nach einem der vorhergehenden Ansprüche, **dadurch gekennzeichnet, dass** die Rastvorsprünge (34, 134) von der Lageraufnahme (30a, 130) abstehen mit einer Länge zwischen 1% und maximal 20%, insbesondere bis maximal 10%, des Durchmessers der hinteren Lageraufnahme (30a, 130) in radialer Richtung.

10. Motor nach einem der vorhergehenden Ansprüche, **dadurch gekennzeichnet, dass** von der Motorabdeckung (38, 138) mindestens zwei Haltezapfen (52) abstehen in Richtung hin zu dem vorderen Ende des Rotors (28) parallel zur Längsmittelachse, wobei die Haltezapfen (52) in Ausnehmungen (18) in dem Stator (13) eingreifen als Verdrehsicherung der Motorabdeckung (38, 138) um die Längsmittelachse.

11. Motor nach einem der vorhergehenden Ansprüche, **dadurch gekennzeichnet, dass** die Rastfederarme (42) von ihrer integralen Verbindung (43) mit der Motorabdeckung (38) beginnend zuerst genau in radialer Richtung verlaufen, dann in einer Biegung (44), insbesondere mit etwa 90°, hin zum vorderen Ende des Rotors (28) gebogen sind, wobei sie daran anschließend in einer weiteren Biegung (45), insbesondere wiederum etwa 90° und mit weitem Radius, hin zur Längsmittelachse gebogen sind.

12. Motor nach Anspruch 11, **dadurch gekennzeichnet, dass** der Rastfederarm (42) nach der letzten Biegung noch einmal wiederum um etwa 90° weit gerundet gebogen ist und dann in Richtung etwa parallel zur Längsmittelachse und weg vom Rotor (28) weist, wobei hieran anschließend das Rastende (47) am Rastfederarm (42) angeordnet ist, vorzugsweise wiederum mit einer Biegung um etwa 90° hin zur Längsmittelachse in der Art, dass das Rastende (47) hin zur Längsmittelachse weist, vorzugsweise in etwa rechtwinklig dazu zeigt.

13. Motor nach einem der vorhergehenden Ansprüche, **dadurch gekennzeichnet, dass** der Rastfederarm (42) derart ausgebildet ist, dass in einer Grundstellung, wenn die Motorabdeckung (38) nicht auf den Motor (13) aufgesetzt ist und der Rastfederarm (42) nicht kraftbelastet oder an der Rastverbindung eingerastet ist, ein Abstand zwischen dem Rastende (47) und dem Rastvorsprung (34) vorgesehen ist, der weg entlang der Richtung der Längsmittelachse weist, wobei vorzugsweise ein solcher Abstand 0,2 cm bis 2 cm bzw. 2% bis 30% der Länge des Rastfederarms (42) beträgt.

14. Pumpe (11) mit einem Pumpenteil (60) und mit einem Motor (13) nach einem der vorhergehenden Ansprüche, **dadurch gekennzeichnet, dass** der Motor (13) an dem Pumpenteil (60) angeordnet ist derart, dass Motor (13) und Pumpenteil (60) die Pumpe (13) als Baueinheit bilden.

## Claims

1. Motor (13), in particular as a unit with a pump (11) for liquid as a liquid pump, wherein the motor (13) comprises:
- a stator (15), in particular with a stator laminated core (17) and stator windings (19) on the stator laminated core (17),
- a rotor (28) with a front end and a rear end,
- a rotor bearing (31) for the rotor (28), wherein the rotor bearing (31) has a rear bearing mount (30a, 130) for the rear end of the rotor (28),
- a motor cover (38, 138) in the area of the rear bearing mount (30a, 130), wherein
- the motor cover (38, 138) is positively connected to at least the rear bearing mount (30a, 130), wherein this positive connection is such that the motor cover (38, 138) is secured against movement in the axial direction of the motor (13) away from the motor (13),
- the positive connection is designed as a positive snap connection with snap-fit projections (34, 134) on the bearing mount (30a, 130),
- at least two elastic snap-fit spring arms (42, 142) are formed on the motor cover (38, 138), each of which interacts with one of the snap-fit projections (34, 134) by means of a snap-fit end (47, 147) as a snap-fit connection,
- the snap-fit spring arms (42, 142) are integrally connected to the motor cover (38, 138) in a region (43) which is more than 50% of the radial extension of the motor cover (38, 138) from the longitudinal centre axis of the rotor (28), in particular between 70% and 90% of the radial extension of the motor cover (38, 138),
- the snap-fit spring arms (42, 142) are elongated and are elastically movable in at least one direction,
**characterised in that** the snap-fit spring arms (42, 142) extend in the radial direction towards the longitudinal centre axis.

2. Motor according to claim 1, **characterised in that** the snap-fit spring arms (42, 142) are all identically designed, are preferably distributed evenly in the circumferential direction around the rear bearing mount (30a, 130), with three snap-fit spring arms (42, 142) being provided in particular.

3. Motor according to claim 1 or 2, **characterised in that** each detent spring arm (142) extends substantially in a plane, in particular in a plane parallel to the longitudinal centre axis, in which the longitudinal centre axis lies.

4. Motor according to claim 1 or 2, **characterised in that** each snap-fit spring arm (42) is bent at least once, in particular twice or three times with opposite bends (44, 45, 46) in each case, from its integral connection (43) with the motor cover (38) to a free end with the snap-fit end (47), preferably bent in an S-shape.

5. Motor according to claim 4, **characterised in that**, due to the bends (44, 45, 46), the free end (47) of the snap-fit spring arm (42) has elastic mobility or bendability in a direction parallel to the longitudinal centre axis and has elastic mobility or bendability in a radial direction.

6. Motor according to one of the preceding claims, **characterised in that** a chamfer (48, 148) is provided at the free end of the snap-fit spring arm (42, 142) as a snap-fit end (47, 147), wherein the chamfer (48, 148) preferably points away from the longitudinal centre axis in the direction from the rear bearing mount (30a, 130) to a front bearing mount.

7. Engine according to one of the preceding claims, **characterised in that** each detent spring arm (42, 142) decreases in width from its integral connection with the motor cover (38, 138) to the free end, in particular uniformly.

8. Motor according to one of the preceding claims, **characterised in that** a protruding projection (49) is formed at the free end of each snap-fit spring arm (42, 142), in particular running approximately parallel to the longitudinal centre axis, which protrudes rearwards as a manual handle for manually releasing the latching connection.

9. Motor according to one of the preceding claims, **characterised in that** the snap-fit projections (34, 134) protrude from the bearing mount (30a, 130) with a length between 1% and a maximum of 20%, in particular up to a maximum of 10%, of the diameter of the rear bearing mount (30a, 130) in the radial direction.

10. Motor according to one of the preceding claims, **characterised in that** at least two retaining pins (52) protrude from the motor cover (38, 138) in the direction of the front end of the rotor (28) parallel to the longitudinal centre axis, wherein the retaining pins (52) engage in recesses (18) in the stator (13) as a means of securing the motor cover (38, 138) against rotation about the longitudinal centre axis.

11. Motor according to one of the preceding claims, **characterised in that** the snap-fit spring arms (42) run first in a precisely radial direction from their integral connection (43) with the motor cover (38), then in a bend (44), in particular at approximately 90°, towards the front end of the rotor (28), whereupon they are bent in a further bend (45), in particular again at approximately 90° and with a wide radius, towards the longitudinal centre axis.

12. Motor according to claim 11, **characterised in that** the snap-fit spring arm (42) is bent once again by approximately 90° after the last bend and then points in a direction approximately parallel to the longitudinal centre axis and away from the rotor (28), whereby the snap-fit end (47) is arranged on the snap-fit spring arm (42), preferably again with a bend of approximately 90° towards the longitudinal centre axis in such a way that the snap-fit end (47) points towards the longitudinal centre axis, preferably at approximately right angles thereto.

13. Motor according to one of the preceding claims, **characterised in that** the snap-fit spring arm (42) is designed such that in a basic position, when the motor cover (38) is not placed on the motor (13) and the snap-fit spring arm (42) is not under force or latched into the latching connection, there is a distance between the snap-fit end (47) and the snap-fit projections (34) which points away along the direction of the longitudinal centre axis, wherein such a distance preferably amounts to 0.2 cm to 2 cm or 2% to 30% of the length of the snap-fit spring arm (42).

14. Pump (11) with a pump part (60) and a motor (13) according to one of the preceding claims, **characterised in that** the motor (13) is arranged on the pump part (60) in such a way that the motor (13) and pump part (60) form the pump (13) as a single unit.

## Revendications

1. Moteur (13), en particulier sous forme d'unité constructive avec une pompe (11) pour liquide en tant que pompe à liquide, le moteur (13) comportant :
- un stator (15), en particulier avec un paquet de tôles de stator (17) et des enroulements de stator (19) sur le paquet de tôles de stator (17),
- un rotor (28) avec une extrémité avant et une extrémité arrière,
- un palier de rotor (31) pour le rotor (28), le palier de rotor (31) comportant un logement de palier arrière (30a, 130) pour l'extrémité arrière du rotor (28),
- un capot de moteur (38, 138) dans la zone du logement de palier arrière (30a, 130),
dans lequel
- le capot de moteur (38, 138) est relié par complémentarité de forme au moins au logement de palier arrière (30a, 130), cette liaison par complémentarité de forme étant telle que le capot de moteur (38, 138) est empêché de s'éloigner du moteur (13) dans la direction axiale de celui-ci,
- la liaison par complémentarité de forme est réalisée sous la forme d'une liaison par encliquetage avec des saillies d'encliquetage (34, 134) sur le logement de palier (30a, 130),
- au moins deux bras à ressort à encliquetage élastiques (42, 142) sont formés sur le capot du moteur (38, 138), chacun d'entre eux coopérant avec l'une des saillies d'encliquetage (34, 134) au moyen d'une extrémité d'encliquetage (47, 147) pour former une liaison par encliquetage,
- les bras à ressort d'encliquetage (42, 142) sont reliés de manière intégrale au capot du moteur (38, 138) dans une zone (43) qui s'étend sur plus de 50 % de l'extension radiale du capot du moteur (38, 138) de l'axe longitudinal du rotor (28), en particulier entre 70 % et 90 % de l'extension radiale du capot du moteur (38, 138),
- les bras de ressort d'encliquetage (42, 142) sont allongés et peuvent se déplacer de manière élastique dans au moins une direction,
**caractérisé en ce que** les bras de ressort d'encliquetage (42, 142) s'étendent dans la direction radiale vers l'axe longitudinal.

2. Moteur selon la revendication 1, **caractérisé en ce que** les bras de ressort d'encliquetage (42, 142) sont tous de conception identique, sont de préférence répartis uniformément dans le sens circonférentiel autour du logement de palier arrière (30a, 130), trois bras à ressort d'encliquetage (42, 142) étant notamment prévus.

3. Moteur selon la revendication 1 ou 2, **caractérisé en ce que** chaque bras de ressort d'encliquetage (142) s'étend essentiellement dans un plan, en particulier dans un plan parallèle à l'axe longitudinal central dans lequel se trouve l'axe longitudinal central.

4. Moteur selon la revendication 1 ou 2, **caractérisé en ce que** chaque bras de ressort d'encliquetage (42) est courbé au moins une fois, en particulier deux ou trois fois avec une courbure opposée (44, 45, 46), de préférence en forme de S.

5. Moteur selon la revendication 4, **caractérisé en ce que**, grâce aux courbures (44, 45, 46), l'extrémité libre (47) du bras de ressort d'encliquetage (42) présente une mobilité élastique ou une flexibilité dans une direction parallèle à l'axe longitudinal central ainsi qu'une mobilité élastique ou une flexibilité dans une direction radiale.

6. Moteur selon l'une des revendications précédentes, **caractérisé en ce qu'**un biseautage (48, 148) est prévu à l'extrémité libre du bras de ressort d'encliquetage (42, 142) en tant qu'extrémité d'encliquetage (47, 147), le biseautage (48, 148) s'éloignant de préférence de l'axe longitudinal dans la direction allant du logement de palier arrière (30a, 130) vers un logement de palier avant.

7. Moteur selon l'une des revendications précédentes, **caractérisé en ce que** chaque bras de ressort d'encliquetage (42, 142) diminue en largeur depuis sa liaison intégrale avec le capot du moteur (38, 138) jusqu'à son extrémité libre, en particulier de manière uniforme.

8. Moteur selon l'une des revendications précédentes, **caractérisé en ce qu'**une saillie (49) est formée à l'extrémité libre de chaque bras de ressort d'encliquetage (42, 142), en particulier s'étendant à peu près parallèlement à l'axe longitudinal, qui dépasse vers l'arrière pour servir de poignée manuelle permettant de libérer manuellement la liaison par encliquetage.

9. Moteur selon l'une des revendications précédentes, **caractérisé en ce que** les saillies d'encliquetage (34, 134) dépassent du logement de palier (30a, 130) d'une longueur comprise entre 1 % et 20 % au maximum, en particulier jusqu'à 10 % au maximum, du diamètre du logement de palier arrière (30a, 130) dans le sens radial.

10. Moteur selon l'une des revendications précédentes, **caractérisé en ce qu'**au moins deux tenons de retenue (52) dépassent du capot du moteur (38, 138) en direction de l'extrémité avant du rotor (28) parallèlement à l'axe longitudinal, les tenons de retenue (52) s'engageant dans des évidements (18) dans le stator (13) pour empêcher la rotation du capot du moteur (38, 138) autour de l'axe longitudinal.

11. Moteur selon l'une des revendications précédentes, **caractérisé en ce que** les bras de ressort d'encliquetage (42) s'étendent d'abord exactement dans le sens radial à partir de leur liaison intégrale (43) avec le capot du moteur (38), puis sont courbés (44), en particulier à environ 90°, vers l'extrémité avant du rotor (28), puis dans un autre coude (45), en particulier à nouveau d'environ 90° et avec un grand rayon, vers l'axe longitudinal.

12. Moteur selon la revendication 11, **caractérisé en ce que** le bras de ressort d'encliquetage (42), après la dernière courbure, est à nouveau courbé de manière arrondie d'environ 90° et pointe alors dans une direction à peu près parallèle à l'axe longitudinal et s'éloignant du rotor (28), l'extrémité d'encliquetage (47) étant alors disposée sur le bras de ressort d'encliquetage (42), de préférence à nouveau avec une courbure d'environ 90° vers l'axe longitudinal, de telle sorte que l'extrémité d'encliquetage (47) soit orientée vers l'axe longitudinal, de préférence à angle droit par rapport à celui-ci.

13. Moteur selon l'une des revendications précédentes, **caractérisé en ce que** le bras de ressort d'encliquetage (42) est conçu de telle sorte que, dans une position de base, lorsque le capot du moteur (38) n'est pas placé sur le moteur (13) et que le bras de ressort d'encliquetage (42) n'est pas soumis à une force ou encliqueté sur la liaison d'encliquetage, une distance est prévue entre l'extrémité d'encliquetage (47) et la saillie d'encliquetage (34), laquelle distance s'étend dans la direction de l'axe longitudinal, une telle distance étant de préférence comprise entre 0,2 cm et 2 cm ou entre 2 % et 30 % de la longueur du bras de ressort d'encliquetage (42).

14. Pompe (11) avec une partie pompe (60) et un moteur (13) selon l'une des revendications précédentes, **caractérisée en ce que** le moteur (13) est disposé sur la partie pompe (60) de telle sorte que le moteur (13) et la partie pompe (60) forment la pompe (13) en tant qu'unité structurelle.
